Europäisches Patentamt

European Patent Office

Office européen des brevets

(19)

(11) Numéro de publication : **0 041 168**
**B1**

(12)

# FASCICULE DE BREVET EUROPÉEN

(45) Date de publication du fascicule du brevet :
09.01.85

(51) Int. Cl.⁴ : **G 01 K   7/32**

(21) Numéro de dépôt : **81103785.2**

(22) Date de dépôt : **18.05.81**

(54) **Sonde de température utilisant une lame de quartz.**

(30) Priorité : **23.05.80 FR 8011509**

(43) Date de publication de la demande :
**09.12.81 Bulletin 81/49**

(45) Mention de la délivrance du brevet :
**09.01.85 Bulletin 85/02**

(84) Etats contractants désignés :
**CH DE FR GB LI NL SE**

(56) Documents cités :
**DE-A- 2 754 669**
**GB-A- 1 351 435**
**Le dossier contient des Informations techniques présentées postérieurement au dépôt de la demande et ne figurant pas dans le présent fascicule.**

(73) Titulaire : **QUARTZ ET ELECTRONIQUE ALCATEL**
**Société anonyme dite:**
**1, rue d'Anjou**
**F-92600 Asnières (FR)**

**Etablissement Public dit: CENTRE NATIONAL DE LA RECHERCHE SCIENTIFIQUE (CNRS)**
**15, Quai Anatole France**
**F-75007 Paris (FR)**

(72) Inventeur : **Gagnepain, Jean-Jacques**
**F-25170 Recologne (FR)**
Inventeur : **Hauden, Daniel**
**10, cité Parc des Chaprais 131, rue de Belfort**
**F-25000 Besançon (FR)**
Inventeur : **Coquerel, Roger**
**F-25170 Recologne (FR)**
Inventeur : **Pegeot, Claude**
**32, avenue Rudé**
**F-78500 Sartrouville (FR)**

(74) Mandataire : **Weinmiller, Jürgen et al**
**Zeppelinstrasse 63**
**D-8000 München 80 (DE)**

## Description

L'invention concerne une sonde de température utilisant une lame de quartz dans un dispositif générateur de fréquence.

Afin d'effectuer des mesures et des contrôles précis de la température, on utilise un capteur thermométrique ayant une grande sensibilité et une bonne linéarité dans la gamme de mesures désirée. La résolution ultime du dispositif de mesure est déterminée par le principe physique du capteur et la chaîne de mesure.

Les sondes thermométriques utilisées jusqu'à maintenant ont pour principe des phénomènes physiques très variés qui leurs permettent de fonctionner dans des gammes de température plus ou moins étendues. On peut citer pour mémoire les sondes utilisant la dilatation thermique d'un corps solide, l'expansion d'un liquide (alcool, mercure) ou d'un gaz (thermomètre à hydrogène), ainsi que les sondes basées sur le rayonnement lumineux (pyromètres). D'autres dispositifs ont pour principe physique les variations de grandeurs électriques en fonction de la température comme par exemple les résistances ou les thermistances, et les thermocouples.

Actuellement, les meilleures performances, lors de mesures thermiques, sont obtenues avec des procédés basés sur les variations de fréquence d'un oscillateur en fonction de la température. En particulier, il a été constaté il y a déjà plusieurs années, que les lames de quartz utilisées comme référence de fréquence dans des oscillateurs de bonne stabilité subissent les effets de la température qui agit comme élément perturbateur.

Du fait de l'anisotropie du quartz, il est possible de trouver des orientations qui minimisent ou qui augmentent sélectivement leur sensibilité à la température.

On connaît, par le document DE-A-2 754 669, une sonde de température dans laquelle la lame de quartz à propagation d'une onde de surface est obtenue par exemple par une coupe à simple rotation autour de l'axe OX. En outre, on connaît, par le document GB-A-1 351 435 une lame de quartz pour la mesure de la température. Cette lame est taillée dans un plan de coupe obtenu par double rotation du plan de référence OXZ, la première rotation ayant lieu autour de l'axe OZ et la seconde rotation, autour de l'axe OX', les angles de rotation étant de + 19° à 23° pour la première rotation et de + 56° à 66° pour la seconde rotation. Une telle lame fonctionne en mode de cisaillement à une fréquence inférieure à 1 MHz ; elle ne peut être utilisée en propagation de surface pour des fréquences élevées.

On connaît (D. L. Hammond, C. A. Adams, P. Schmidt A linear quartz crystal temperature sensing element — 19ᵉ Conférence annuelle de l'ISA — octobre 1964) une orientation du quartz permettant d'obtenir une lame ayant un coefficient de température linéaire dans une large gamme de température. Cette coupe de quartz à onde de volume, dite coupe LC (coefficient linéaire) a permis la réalisation d'un thermomètre à quartz en bouclant la lame sur un amplificateur pour obtenir un oscillateur dont la fréquence varie linéairement avec la température (D. L. Hammond et A. Benjaminson, « Un thermomètre linéaire à quartz », Mesure — février 1966). Les mesures peuvent être effectuées automatiquement avec une résolution de $10^{-4}$ °C dans une gamme de température allant de $-40$ °C à $+230$ °C. L'inconvénient majeur d'une telle sonde est que le temps de réponse est alors de l'ordre de 10 secondes et tient au fait que la lame de quartz à onde de volume est maintenue par 3 points de fixation par lesquels se fait l'essentiel des échanges thermiques, l'hélium contenu dans le boîtier améliorant légèrement la conductibilité thermique. La sensibilité de cette sonde est de l'ordre de $35 \cdot 10^{-6}$/°C, ce qui correspond à une variation de fréquence de $10^3$ hertz par degré centigrade, à la fréquence de résonance de 28 MHz (partiel 3).

Un but de l'invention est de diminuer le temps de réponse d'une sonde de température.

Un autre but de l'invention est d'augmenter la précision de mesure de la température.

L'invention a pour objet une sonde de température utilisant une lame de quartz à propagation d'une onde de surface dans un dispositif générateur de fréquence, ladite lame étant taillée dans un plan de coupe obtenu par double rotation d'un plan de référence du quartz défini par l'axe optique et un axe électrique du quartz, caractérisée par le fait que le plan de coupe est défini par une première rotation d'un angle $\phi$ compris entre 9°24' et 13°24' du plan de référence autour de l'axe optique et une deuxième rotation d'un angle $\theta$ compris entre 57°14' et 61°24' autour d'un axe de seconde rotation correspondant à l'axe électrique après la première rotation, et que la propagation de l'onde de surface a lieu selon une direction qui fait un angle $\psi$ compris entre 33° et 37° avec l'axe de seconde rotation.

D'autres caractéristiques et avantages ressortiront de la description qui va suivre d'exemples de réalisation de l'invention illustrés par les figures annexées dans lesquelles :

la figure 1   représente la rotation d'un trièdre de référence du quartz dans une coupe à double rotation,

la figure 2   représente l'orientation de la direction de propagation d'une onde de surface dans une lame à double rotation,

la figure 3   représente un premier type d'une sonde de température de l'invention,

la figure 4   représente un second type d'une sonde de température de l'invention,

la figure 5   représente un troisième type d'une sonde de température de l'invention,

la figure 6   représente un quatrième type d'une sonde de température de l'invention,

les figures 7 à 10 représentent différents modes de montage dans un boîtier d'une lame de quartz d'une sonde de température de l'invention,

la figure 11 représente une courbe fréquence-température d'une sonde de température.

La sonde de température objet de l'invention est basée sur les propriétés des cristaux de quartz, propriétés particulièrement intéressantes pour les applications des résonateurs ou des lignes à retard dans les oscillateurs ; les principales propriétés sont leur grande pureté et leur bonne stabilité chimique ainsi que leur grande élasticité.

La structure anisotrope du quartz permet d'agir, par un choix des orientations angulaires, sur la caractéristique « fréquence-température ». Ainsi, la coupe ST est telle que la courbe de la fréquence en fonction de la température est parabolique, la température d'inversion étant voisine de + 20 °C. Les lames obtenues selon une telle coupe, à simple rotation, sont utilisées dans les dispositifs à ondes de surface.

La caractéristique « fréquence-température » d'un cristal de quartz est représentée correctement sur une plage assez large de températures par un polynôme du troisième degré :

$$f(T) = f(T_0) \; [1 + \overset{(1)}{\alpha f} \cdot (T - T_0) + \overset{(2)}{\alpha f} \cdot (T - T_0)^2 + \overset{(3)}{\alpha f} \cdot (T - T_0)^3]$$

où $T_0$ est la température de référence

$\overset{(1)}{\alpha f}, \; \overset{(2)}{\alpha f}, \; \overset{(3)}{\alpha f}$ sont les coefficients de température du premier, deuxième et troisième ordre de la fréquence.

On trouvera une étude des coefficients et de la variation de la fréquence en fonction de la température dans l'article de D. Hauden, M. Michel, J. J. Gagnepain, « High order temperature coefficients of quartz SAW oscillators », Proceedings of the 32nd Annual Symposium on Frequency Control, may 1978.

Une lame de quartz présentant une réponse en fréquence idéale en fonction de la température doit être telle que les coefficients $\overset{(2)}{\alpha f}$ et $\overset{(3)}{\alpha f}$ soient nuls ; dans ce cas, la caractéristique « fréquence-température » est parfaitement linéaire.

Les demanderesses ont trouvé que les deux degrés de liberté, les angles $\phi$ et $\theta$, définissant une coupe à double rotation du quartz permettent d'obtenir des lames dont les coefficients du second et troisième ordre ont des valeurs plus faibles que pour des lames à simple rotation ; de plus, il est possible de diminuer encore la valeur de ces coefficients en choisissant une direction de propagation des ondes de surface différente de celle d'un axe OX″ obtenu par rotation d'un angle $\phi$ d'un axe électrique du cristal autour de son axe optique OZ. De telles lames sont obtenues par une coupe à double rotation dont les angles $\phi$ et $\theta$ sont compris dans les plages suivantes : 9°24′ à 13°24′ pour l'angle $\phi$ et 57°24″ à 61°24″ pour l'angle $\theta$ ; pour de telles lames, la direction de propagation des ondes de surface fait un angle $\psi$ compris entre 33° et 37° avec l'axe OX″.

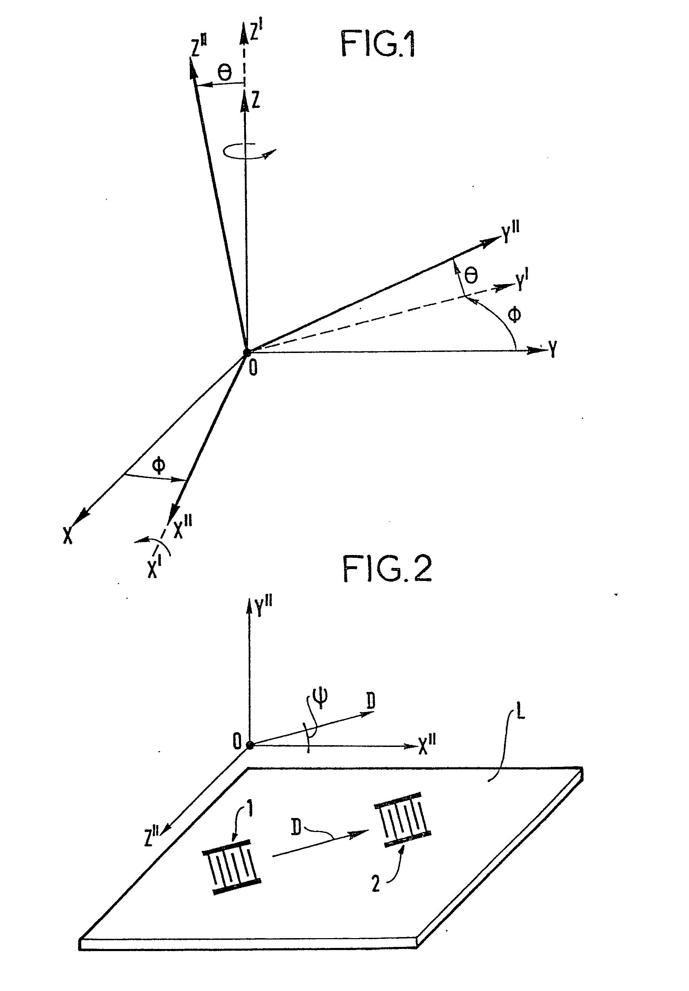

La figure 1 représente la rotation du trièdre de référence OXYZ dans une coupe à double rotation.

Le trièdre de référence est défini par l'axe optique OZ du cristal, par un axe électrique OX et par un axe mécanique OY faisant un angle de 90° avec l'axe OX.

L'angle $\phi$ correspond à une rotation du trièdre de référence autour de l'axe OZ ; on obtient le trièdre OX′Y′Z′.

L'angle $\theta$ correspond à une rotation du trièdre OX′Y′Z′ autour de l'axe OX′ ; on obtient ainsi le trièdre OX″Y″Z″, avec l'axe OX″ confondu avec l'axe OX′. Le plan de coupe, donc le plan des lames est le plan OX″Z″.

La figure 2 représente l'orientation de la direction de propagation D d'une onde de surface dans une lame L à double rotation, munie de deux transducteurs 1 et 2.

La direction de propagation D fait un angle $\psi$ avec l'axe OX″, dans le plan OX″Z″.

Les angles $\phi$, $\theta$ et $\psi$ sont les notations de la convention IEEE de 1949.

Pour une orientation telle que définie ci-après les coefficients du deuxième et troisième ordre sont nuls, aux imprécisions de mesure près, bien entendu ; les valeurs correspondantes des angles $\phi$, $\theta$, $\psi$ sont les suivantes :

$\phi = 11°24′$

$\theta = 59°24′$

$\psi = 35°$.

Une lame métallisée, dont les orientations ont les valeurs indiquées ci-dessus, présente un coefficient de température de $30 \cdot 10^{-6}/°C$ ; une telle lame métallisée sera appelée lame LST (Linéairement sensible à la température).

Les lames LST peuvent être soit du type ligne à retard, soit du type résonateur.

La ligne à retard à onde de surface est constituée par deux transducteurs constitués chacun par deux peignes interdigités, métalliques, déposés sur une face du substrat piézoélectrique. Les transducteurs étant bidirectionnels, les ondes de surface sont émises dans les directions opposées ; une matière absorbante élimine les ondes émises vers l'extérieur du substrat.

Le résonateur comporte un transducteur et un réflecteur de chaque côté du transducteur qui est généralement lui-même constitué par deux peignes interdigités.

Les peignes sont orientés sur la lame de quartz, tant pour la ligne à retard que pour le résonateur, de manière à obtenir une direction de propagation de l'onde de surface faisant un angle avec l'axe OX", comme représenté figure 2.

Les lames de quartz sont taillées et mesurées selon les techniques habituelles. On se rapportera pour l'orientation et la mesure des lames à l'article de J. Clastre, C. Pegeot et P. Y. Leroy : « Goniometric Measurements of the Angles of Cut of Doubly Rotated Quartz Plates », Proceedings of the 32nd Annual Symposium on Frequency Control, US Army Electronic Command, Ft Monmouth, New Jersey — may 1978.

Les peignes et réflecteurs sont ensuite obtenus par les techniques habituelles, et notamment par photogravure.

Une sonde de température de l'invention est essentiellement un dispositif générateur de fréquence réalisé à l'aide d'une lame LST, celle-ci étant utilisée soit en bouclage sur un amplificateur, soit en asservissement de phase d'un générateur de fréquence, d'un synthétiseur ou d'un oscillateur local de type VCO. La réponse en température de la sonde de température est obtenue en traçant sa caractéristique fréquence-température.

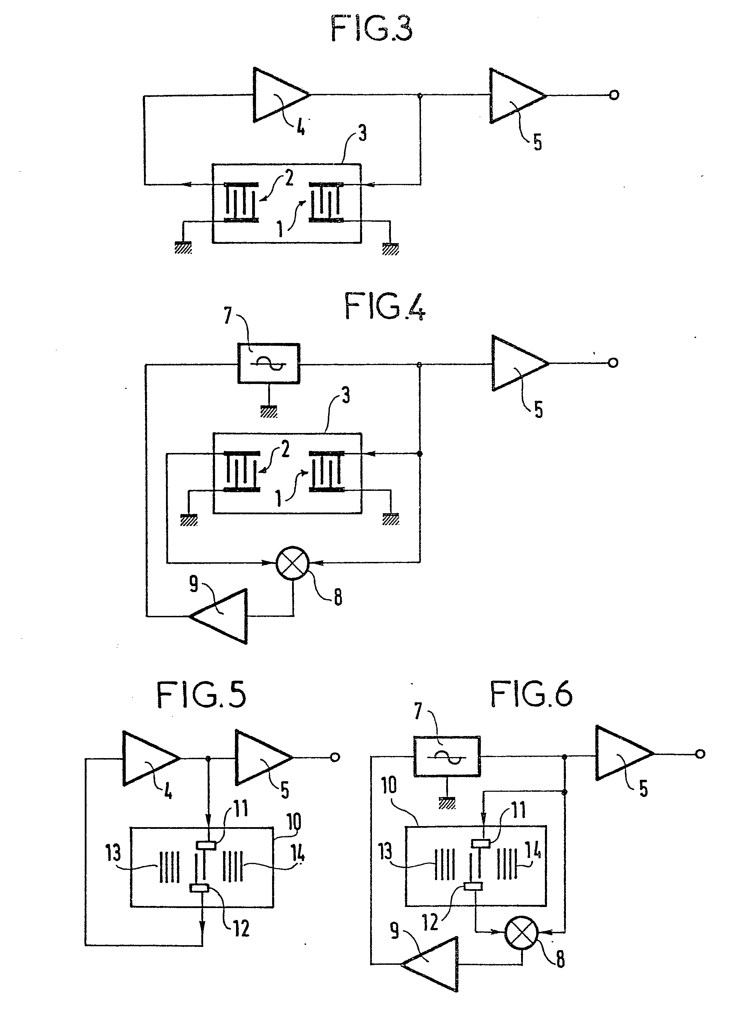

La figure 3 représente schématiquement une sonde de température de l'invention comportant une ligne à retard 3 aux bornes d'un amplificateur 4, et un amplificateur de sortie 5. Les transducteurs 1 et 2 de la ligne à retard 3 sont reliés à la sortie et à l'entrée de l'amplificateur 4, respectivement. La ligne à retard 3 et l'amplificateur 4 constituent un oscillateur.

Les conditions d'oscillation sont remplies si le gain de l'amplificateur 4 est suffisant pour compenser les pertes et si la phase totale de la boucle d'oscillation est égale à un multiple entier de $2\pi$.

On doit donc avoir $\varphi_A + \varphi_L = 2\,k\pi$,

$\varphi_A$ étant le déphasage introduit par l'amplificateur 4, les circuits d'adaptation et les transducteurs.

$\varphi_L$ étant le déphasage dû au retard de la ligne 3.

La stabilité relative de l'oscillateur est de l'ordre de quelque $10^{-9}$ sur la seconde.

La figure 4 représente une sonde de température dans laquelle la ligne à retard 3 est utilisée dans une boucle d'asservissement de phase d'un générateur de fréquence 7 qui peut également être un synthétiseur ou un oscillateur du type VCO. La sortie du générateur de fréquence 7 est reliée à un amplificateur de sortie 5, au transducteur 1 de la ligne à retard et à une entrée d'un comparateur de phase 8 dont une autre entrée est reliée au transducteur 2 de la ligne à retard ; la sortie du comparateur de phase 8 est reliée à travers un amplificateur 9 à une entrée de commande du générateur de fréquence 7. Le comparateur de phase délivre un signal qui est fonction du déphasage entre le signal de sortie du générateur de fréquence 7 et ce même signal retardé par la ligne à retard 3 ; le retard apporté par la ligne à retard est lui-même fonction de la température. En effet, les variations de température provoquent une modification d'une part de la distance entre les transducteurs (parcours de l'onde de surface) et d'autre part de la vitesse de propagation de l'onde de surface) et d'autre part de la vitesse de propagation de l'onde par suite des variations des modules élastiques du quartz. Il s'ensuit une variation du retard entre l'entrée et la sortie de la ligne à retard, donc de la fréquence de synchronisme de la ligne. Dans le cas d'une lame LST, cette variation suit une loi quasi linéaire en fonction de la température.

La figure 5 représente une sonde de température utilisant un résonateur. Cette figure est identique à la figure 3 dans laquelle la ligne à retard est remplacée par le résonateur 10, comportant deux peignes 11 et 12, interdigités, et deux réflecteurs 13 et 14 ; les peignes 11 et 12 sont représentés ici schématiquement. L'amplificateur 4 est relié en entrée au peigne 12 et en sortie au peigne 11 et à l'amplificateur de sortie 5.

La figure 6 représente une sonde de température dans laquelle le résonateur 10 est utilisé dans une boucle d'asservissement de phase d'un générateur de fréquence 7 qui peut être également un synthétiseur ou un oscillateur du type VCO. La sortie du générateur de fréquence 7 est reliée à un amplificateur de sortie 5, au peigne 11 du résonateur 10, et à une entrée du comparateur de phase 8 dont une autre entrée est reliée au peigne 12 du résonateur ; la sortie du comparateur de phase 8 est reliée à travers un amplificateur 9 à une entrée de commande du générateur de fréquence 7.

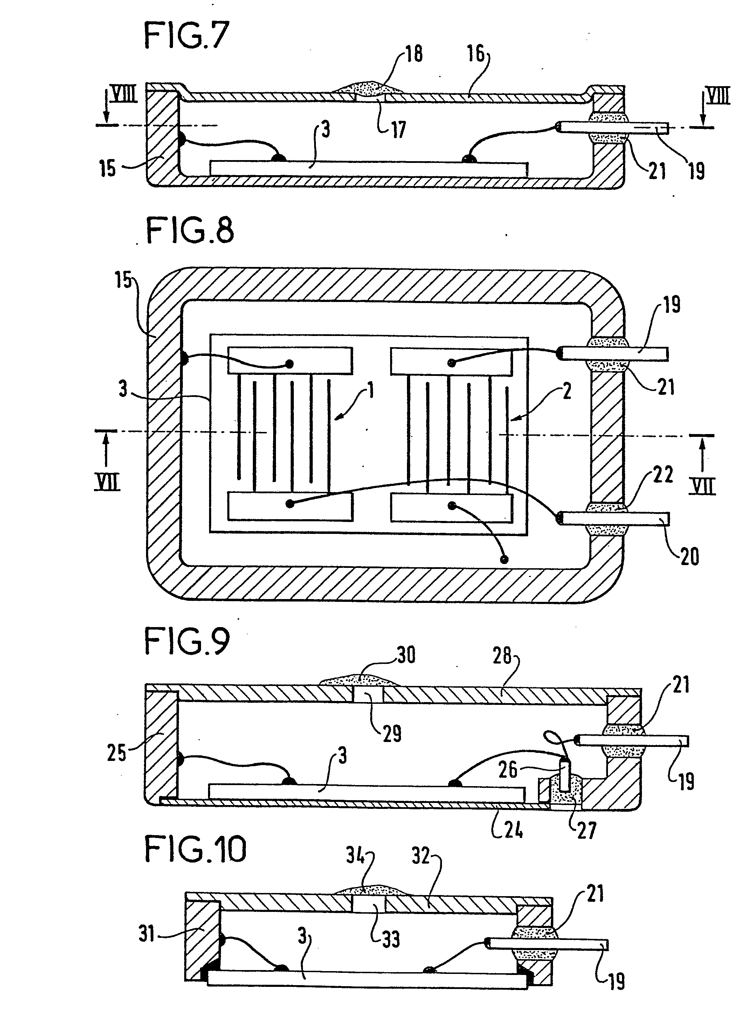

Les figures 7 et 8 représentent un premier mode de réalisation d'un montage dans un boîtier d'une lame de quartz d'une sonde de température de l'invention, la figure 7 étant une vue en élévation en coupe selon la coupe VII-VII de la figure 8 qui est une vue de dessus en coupe, selon la coupe VIII-VIII de la figure 7.

Une lame de quartz 3 d'une ligne à retard est collée par une face sur un boîtier 15 métallique, une autre face, opposée, portant les peignes 1 et 2. Le boîtier est fermé par un couvercle 16, également métallique, soudé sur le boîtier 15. Le couvercle comporte un trou 17 qui permet de faire le vide dans l'enceinte formée par le boîtier et le couvercle, et de remplir ensuite cette enceinte de gaz, tel que l'hélium par exemple ; le trou 17 est ensuite obturé, par une goutte de soudure 18, par exemple. Deux bornes 19, 20 métalliques, sont isolées électriquement du boîtier par une perle de verre 21, 22 respectivement, qu'elles traversent ; la borne 19 est reliée à un peigne du transducteur 2 dont l'autre peigne est relié au boîtier ; la borne 20 est reliée à un peigne du transducteur 1 dont l'autre peigne est relié au boîtier. Les bornes servent au raccordement des transducteurs.

La figure 9 est une vue en élévation et en coupe, d'un deuxième mode de réalisation du montage d'une lame de quartz d'une sonde de température.

Dans cette figure un boîtier 25, métallique est muni d'un clinquant métallique 24 en cuivre au nickel, par exemple, d'épaisseur faible, de l'ordre de 0,05 millimètre, sur lequel la lame de quartz 3 d'une ligne à retard est soudée. Le boîtier comporte également, comme dans les figures 7 et 8 deux bornes isolées du boîtier, dont une seule 19 est visible.

Le boîtier comporte deux bornes auxiliaires, dont une seule 26 est visible ; elle est reliée d'une part à un peigne d'un transducteur, et d'autre part à la borne 19 par une courte liaison en fil inox qui réalise une coupure thermique entre le peigne et la borne 19. Les bornes auxiliaires 26 sont isolées du boîtier par une perle de verre 27 ; la borne auxiliaire 26 ne traverse pas la perle de verre 27, et ne communique pas avec l'extérieur. Un peigne de chacun des transducteurs est relié au boîtier qui est fermé par un couvercle 28 dont un trou 29 pour le pompage et le remplissage par un gaz, de l'hélium par exemple, est obturé par une goutte de soudure 30.

La figure 10 est une vue en élévation et en coupe d'un troisième mode de réalisation du montage d'une lame de quartz d'une sonde de température.

Dans cette figure la lame de quartz 3, qui est une ligne à retard, constitue le fond d'un boîtier 31 auquel elle est soudée par sa périphérie. Comme précédemment, figure 7, le boîtier comporte deux bornes 19, chacune reliée à un peigne d'un transducteur dont l'autre peigne est relié au boîtier fermé par un couvercle 32, dont un trou 33 est obturé par une goutte de soudure 34.

Dans les figures 7 à 10, on a supposé que la lame de quartz est une ligne à retard ; bien entendu on peut utiliser un résonateur, et dans ce cas les bornes 19, 20 du boîtier (figure 8) sont réunies chacune à un peigne, respectivement, du transducteur du résonateur, et il n'y a bien évidemment pas de connexion entre les peignes et le boîtier.

Les sondes de température de l'invention ont une inertie thermique faible, la lame de quartz étant soit collée par une face sur un métal bon conducteur de la chaleur, tel le cuivre par exemple (comme illustré figures 7 à 9), soit en contact direct avec le milieu dont on désire mesurer la température (figure 10). Le temps de propagation de la chaleur dans le quartz étant faible, inférieur à un dixième de seconde, le temps de réponse de la lame de quartz, donc de la sonde de température est faible et fixé essentiellement par la capacité thermique du boîtier ; cette capacité thermique est d'autant plus faible que le boîtier est plus petit ; le contact intime de la lame de quartz avec le boîtier permet d'obtenir des boîtiers notablement plus petits enfermant des lames de quartz à onde de volume. D'autre part la lame de quartz étant d'autant plus petite que la fréquence est élevée, il s'ensuit une diminution des dimensions du boîtier.

Une sonde de température conforme à l'invention, utilisant la propagation des ondes en surface d'un substrat de quartz, permet des mesures à fréquence élevée, jusqu'à 3 gigahertz, ce que ne permettent pas les sondes de température connues utilisant la propagation des ondes dans le volume du substrat.

La résolution des dispositifs de mesure de fréquence étant limitée, la précision de mesure, à une température donnée, est d'autant meilleure que la fréquence est élevée.

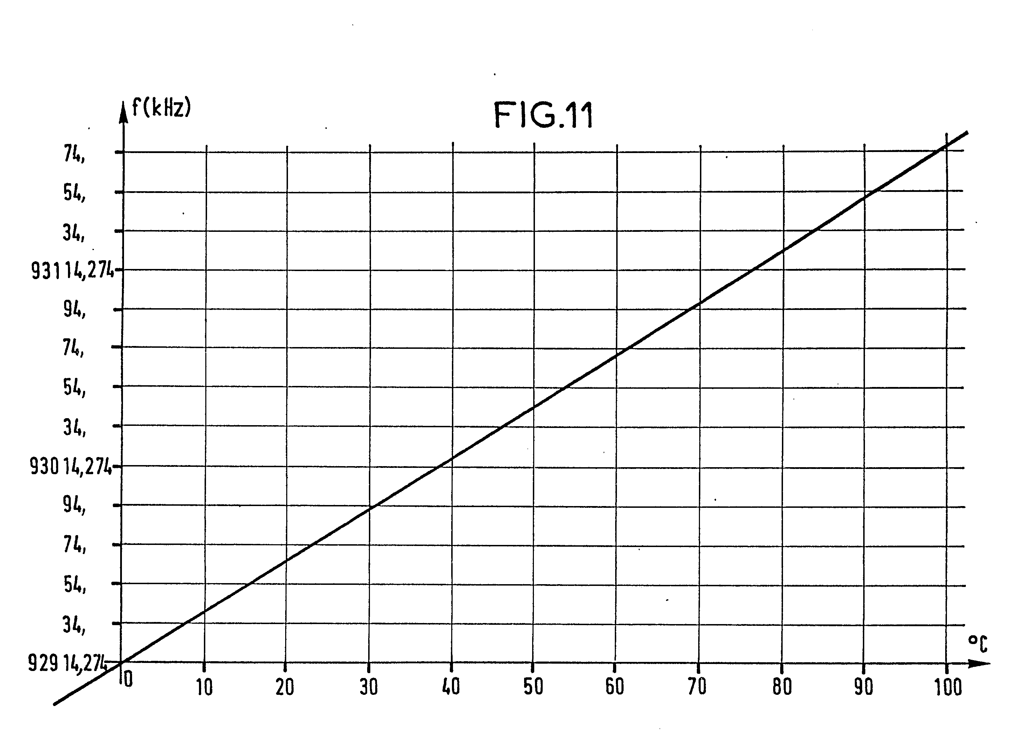

La figure 11 représente, à titre d'exemple, la courbe de réponse « fréquence-température d'une sonde de température pour une fréquence de l'ordre de 93 MHz.

La gamme de température est ici de − 15 °C à + 100 °C. La sensibilité est de l'ordre de $28 \cdot 10^{-6}/°C$, soit 2 720 Hz/°C à 93 MHz. Le défaut de linéarité maximum mesuré est de l'ordre de 0,1 °C dans la gamme des températures de 0 °C à + 80 °C.

Les sondes de températures décrites et représentées sont utilisables d'une part dans des thermomètres de bonnes performances pour des mesures rapides de la température, et d'autre part comme élément sensible à la température pour des thermostats de grande qualité.

Deux types de thermomètres peuvent être réalisés : un thermomètre à lecture analogique et un thermomètre à lecture numérique.

Dans l'application aux thermostats, une sonde de température de l'invention permet de réaliser un thermostat numérique à microprocesseur, la précision pouvant atteindre quelques micro degrés centigrades, ou un thermostat analogique à asservissement de phase, d'un oscillateur du type VCO en étage mélangeur donnant une précision de l'ordre du micro-degré centigrade par variation continue.

**Revendications**

1. Sonde de température utilisant une lame de quartz dans un dispositif générateur de fréquence, ladite lame étant taillée dans un plan de coupe obtenu par double rotation d'un plan de référence (OXZ) du quartz défini par l'axe optique (OZ) et un axe électrique (OX) du quartz, caractérisé par le fait que le plan de coupe est défini par une première rotation d'un angle $\phi$ compris entre 9°24' et 13°24' du plan de référence autour de l'axe optique (OZ) et une deuxième rotation d'un angle $\theta$ compris entre 57°24' et 61°24' autour d'un axe de seconde rotation correspondant à l'axe électrique (OX') après la première rotation, et qu'une propagation de l'onde de surface a lieu selon une direction qui fait un angle $\psi$ compris entre 33° et 37° avec l'axe de seconde rotation.

**0 041 168**

2. Sonde de température selon la revendication 1, caractérisée par le fait que l'angle de première rotation φ est égal à 11°24', que l'angle de seconde rotation θ est égal à 59°24', et que l'angle ψ est égal à 35°.

**Claims**

1. A temperature probe using a quartz dice in a frequency generator device, said dice being cut in a cut plane obtained by double rotation of a reference plane (OXZ) of the quartz defined by the optical axis (OZ) and an electric axis (OX) of the quartz, characterized in that the cut plane is defined by a first rotation of an angle φ between 9°24' and 13°24' of the reference plane around the optical axis (OZ), and a second rotation by an angle θ between 57°24' and 61°24' around an axis of second rotation corresponding to the electric axis (OX') after the first rotation, and that a propagation of the surface wave takes place according to a direction which makes an angle ψ between 33° and 37° with the axis of second rotation.

2. A temperature probe according to claim 1, characterized in that the angle of first rotation φ is equal to 11°24', that the angle of second rotation θ is equal to 59°24', and that the angle ψ is equal to 35°.

**Ansprüche**

1. Temperaturmeßsonde mit einem Quarzplättchen in einer Frequenzgeneratorvorrichtung, wobei das Plättchen in einer Schnittebene geschnitten ist, die durch doppelte Drehung einer Bezugsebene (OXZ) des Quarzes definiert durch die optische Achse (OZ) und eine elektrische Achse (OX) des Quarzes erhalten wird, dadurch gekennzeichnet, daß die Schnittebene definiert wird durch eine erste Drehung um einen Winkel φ zwischen 9°24' der Bezugsebene um die optische Achse (OZ) und eine zweite Drehung um einen Winkel θ zwischen 57°24' und 61°24' um eine Achse der zweiten Drehung, die der elektrischen Achse (OX') nach der ersten Drehung entspricht, und daß eine Fortpflanzung der Oberflächenwelle gemäß einer Richtung stattfindet, die einen Winkel ψ zwischen 33° und 37° mit der Achse der zweiten Drehung bildet.

2. Temperaturmeßsonde nach Anspruch 1, dadurch gekennzeichnet, daß der Winkel φ der ersten Drehung gleich 11°24' ist, daß der Winkel θ der zweiten Drehung gleich 59°24' ist und daß der Winkel ψ gleich 35° ist.

6

FIG.1

FIG.2

FIG.3

FIG.4

FIG.5

FIG.6

FIG.7

FIG.8

FIG.9

FIG.10

FIG.11

f(kHz)

°C

0 041 168

4